# EUROPÄISCHE PATENTSCHRIFT

(11) **EP 1 831 282 B1**
(45) Veröffentlichungstag und Bekanntmachung des Hinweises auf die Patenterteilung: **21.03.2012**
(21) Anmeldenummer: 05817703.1
(22) Anmeldetag: 09.12.2005
(51) Int. Cl.: C08G 64/12

(54) **POLYCARBONATE MIT GUTER BENETZBARKEIT**
POLYCARBONATES HAVING GOOD WETTABILITY
POLYCARBONATES AYANT UNE BONNE MOUILLABILITE

(30) Priorität: 22.12.2004 DE 102004061713
(43) Veröffentlichungstag der Anmeldung: 12.09.2007
(73) Patentinhaber: Bayer MaterialScience AG, 51368 Leverkusen (DE)
(72) Erfinder: MEYER, Alexander, 40237 Düsseldorf (DE); EINBERGER, Helmut, 51519 Odenthal (DE); EBERT, Wolfgang, 47800 Krefeld (DE); PREIN, Michael, 47809 Krefeld (DE); HAESE, Wilfried, 51519 Odenthal (DE); FRANZ, Uli, 40699 Erkrath (DE); KONRAD, Stephan, 41541 Dormagen (DE)
(86) Internationale Anmeldenummer: PCT/EP2005/013214
(87) Internationale Veröffentlichungsnummer: WO 2006/072344

(56) Entgegenhaltungen:
- EP-A- 1 216 982
- EP-A- 1 426 396
- DE-A1- 4 239 131
- US-A- 4 737 573
- DATABASE CA [Online] CHEMICAL ABSTRACTS SERVICE, COLUMBUS, OHIO, US; OKAMOTO, MASAYA: "Polycarbonate compositions with excellent transparency" XP002376196 gefunden im STN Database accession no. 120:78659 & JP 05 214236 A2 (IDEMITSU PETROCHEMICAL CO, JAPAN) 24. August 1993 (1993-08-24)

## Beschreibung

Gegenstand der Erfindung sind Polycarbonate als Substratmaterial zur Herstellung transparenter Spritzgussteile, insbesondere zur Herstellung von zu beschichtenden Spritzgussteilen sowie Formteile erhältlich aus den erfindungsgemäßen Polycarbonaten. Formteile können z.B. transparente platten, Linsen, optische Speichermedien bzw. Träger für optische Speichermedien oder auch Artikel aus dem Bereich des Automotive Glazings wie z.B. Streulichtscheiben sein. Gegenstand der Erfindung sind insbesondere optische Speichermedien bzw. Träger für optische Speichermedien wie z.B. beschreibbare optische Datenspeicher, welche gute Beschichtbarkeit und Benetzungsfähigkeit aufweisen und z.B. für die Auftragung von Farbstoffen aus Lösung insbesondere aus unpolaren Medien geeignet sind. Zudem weisen die optischen Spritzgussteile aus den erfindungsgemäßen Polycarbonaten eine geringere Verschmutzungsneigung auf.

Transparente Spritzgussteile sind vor allem im Bereich des Glazings und der Speichermedien von Bedeutung.

Optische Datenaufzeichnungsmaterialien werden zunehmend als variables Aufzeichnungs- und/oder Archivierungsmedium für große Datenmengen verwendet. Beispiele für diese Art von optischen Datenspeichern sind CD, Super-Audio-CD, CD -R, CD -RW, DVD, DVD - R, DVD+R, DVD - RW, DVD+RW und BD.

Transparente thermoplastische Kunststoffe wie zum Beispiel Polycarbonat, Polymethylmethacrylat und chemische Modifikationen hiervon werden typischerweise für optische Speichermedien eingesetzt. Polycarbonat als Substratmaterial eignet sich insbesondere für einmal beschreibbare und mehrfach auslesbare sowie auch für mehrfach beschreibbare optische Disks sowie für die Herstellung von Formteilen aus dem Bereich des Automotive Glazings, wie z.B. von Streulichtscheiben. Dieser thermoplastische Kunststoff verfügt über eine ausgezeichnete mechanische Stabilität, ist wenig anfällig gegenüber Dimensionsveränderungen und zeichnet sich durch eine hohe Tränsparenz und Schlagzähigkeit aus.

Polycarbonat, hergestellt nach dem Phasengrenzflächenprozess, kann für die Herstellung von optischen Datenspeichern der oben beschriebenen Formate wie z.B. für Compact Disks (CD) oder Digital Versatile Disks (DVD) verwendet werden. Diese Disks haben oft die Eigenschaft während ihrer Herstellung im Spritzgussverfahren ein hohes elektrostatisches Feld aufzubauen. Diese hohe elektrostatische Feldstärke auf dem Substrat führt während der Herstellung der optischen Datenspeicher, z.B. zur Anziehung von Staub aus der Umgebung, bzw. zum Verkleben der Spritzgussartikel wie z.B. der Disks untereinander, was die Qualität der fertigen Spritzgussartikel mindert und das Spritzgussverfahren erschwert.

Es ist ferner bekannt, dass die elektrostatische Aufladung (in Form von elektrostatischen Feldern) insbesondere von Disks (für optische Datenträger) zu einer mangelnden Benetzbarkeit vor allem mit unpolaren Medien, wie z.B. einem unpolaren Farbstoff oder einem Farbstoffauftrag aus Lösungsmitteln, wie z.B. Dibutylether, Ethylcyclohexan, Tetrafluorpropanol, Cyclohexan, Methylcyclohexan oder Octafluorpropanol, führt. So verursacht ein hohes elektrisches Feld an der Oberfläche des Substrates während des Farbstoffauftrags bei beschreibbaren Datenspeichern zum Beispiel eine unregelmäßige Beschichtung mit Farbstoff und führt damit zu Defekten in der Informationsschicht.

Das Maß der elektrostatischen Aufladung eines Substratmaterials kann z.B. durch Messung des elektrostatischen Feldes in einem bestimmten Abstand zur Substratoberfläche quantifiziert werden.

Im Falle eines optischen Datenspeichers bei dem ein beschreibbares Substrat auf der Oberfläche in einem Spin Coating Prozess aufgetragen wird, ist eine niedrige absolute elektrische Feldstärke erforderlich, um die gleichmäßige Auftragung der beschreibbaren Schicht zu gewährleisten und einen störungsfreien Produktionsprozess sicherzustellen.

Außerdem verursacht ein hohes elektrostatisches Feld aufgrund der oben beschriebenen Fakten Ausbeuteverluste hinsichtlich des Substratmaterials. Dies kann zum Stopp des jeweiligen Produktionsschrittes führen und ist mit hohen Kosten verbunden.

Um dieses Problem einer hohen elektrostatischen Aufladung zu lösen, wurden mehrere Ansätze verfolgt. Im Allgemeinen werden Antistatika als Additive dem Substratmaterial zugesetzt. Antistatische Polycarbonat-Zusammensetzungen werden z.B. in JP 62 207 358-A beschrieben. Hier werden u. a. Phosphorsäurederivate als Antistatika dem Polycarbonat zugesetzt. EP 0922 728-A beschreibt verschiedene Antistatika wie Polyalkylenglykolderivate, ethoxyliertes Sorbitanmonolaurat, Polysiloxanderivate, Phosphinoxide, sowie Distearylhydroxyamin, welche einzeln oder als Mischungen eingesetzt werden. Die japanische Anmeldung JP 62 207 358 beschreibt Ester der phosphorigen Säure als Additive. In US Patent 5,668,202 werden Sulfonsäurederivaten beschrieben. In WO 00/50 488 wird 3,5-Di-tert-butylphenol als Kettenabbrecher im Phasengrenzflächenverfahren eingesetzt. Dieser Kettenabbrecher führt zu einer niedrigeren statischen Aufladung des entsprechenden Substratmaterials verglichen mit herkömmlichen Kettenabbrechern. JP 62 207 358-A beschreibt Polyethylen- bzw. Polypropylenderivate als Additive für Polycarbonat.

Die beschriebenen Additive können sich jedoch auch nachteilig auf die Eigenschaften des Substratmaterials auswirken, da sie dazu neigen, aus dem Material auszutreten. Dies ist zwar für die Antistatik-Eigenschaften ein wünschenswerter Effekt kann aber zu Belagsbildung oder mangelhafter Abformung führen. Weiterhin kann auch der Gehalt an Oligomeren im Polycarbonat zu einem schlechteren mechanischen Eigenschaftsniveau und zu einer Absenkung der Glasübergangstemperatur führen. Ferner können diese Zusätze Nebenreaktionen verursachen. Das nachträgliche "Endcapping" von Polycarbonat, welches aus dem Umesterungsprozess gewonnen wurde, ist aufwendig und die erreichten Resultate nicht optimal. Neue Endgruppen in das Material einzuführen ist mit hohen Kosten verbunden.

Somit stellt sich die Aufgabe eine Zusammensetzung bzw. ein Substratmaterial zur Verfügung zu stellen, welches den Anforderungen einer möglichst niedrigen Feldstärke an der Substratoberfläche genügt und die oben beschriebenen Nachteile vermeidet.

Überraschenderweise wurde die Aufgabe dadurch gelöst, dass insbesondere solche Materialien für die Herstellung optischer Datenspeicher eingesetzt werden, welche möglichst wenig Fehlstrukturen, insbesondere wenig Carbamatverbindungen spezieller Struktur, enthalten. Ein bestimmter Gehalt von Carbamatverbindungen im Substratmaterial kann durch Zusatz von Additiven, durch Verunreinigung von Vorprodukten oder durch das Herstellverfahren selbst bedingt sein.

Gegenstand der vorliegenden Erfindung sind Polycarbonate, die nach alkalischer Hydrolyse mit Natronlauge und anschließender Chromatographie mittels High Pressure Liquid Cromatographie (HPLC) 0,01 bis 150 ppm, bevorzugt 0,01 bis 100 ppm und insbesondere bevorzugt 0,01 bis 50 ppm Verbindungen der Formel (1) aufweisen 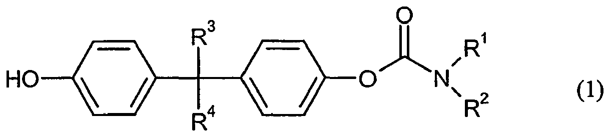 worin
- R¹ und R²: unabhängig voneinander Wasserstoff oder C₁-C₁₂-Alkyl, vorzugsweise Methyl, Ethyl, Propyl, Isopropyl oder Butyl oder R¹ und R² gemeinsam für C₄-C₁₂-Alkyliden, vorzugsweise C₄-C₈-Alkyliden, besonders bevorzugt C₄-C₅-Alkyliden bedeuten,
- R³ und R⁴: unabhängig voneinander für Wasserstoff, C₁-C₁₂-Alkyl, vorzugsweise C₁-C₈-Alkyl, oder Phenyl stehen oder R³ und R⁴ mit dem Kohlenstoffatom, an das sie gebunden sind, Cyclohexyl oder Trimethylcyclohexyl bilden.

Spritzgusskörper, vorzugsweise optische Disks, erhältlich aus den erfindungsgemäßen Polycarbonaten, zeigen nach Verarbeitung zu einem Spritzgusskörper, eine niedrige elektrostatische Aufladung. Dies ist insbesondere für die Herstellung optischer Speichermedien wichtig.

Die erfindungsgemäßen Polycarbonate/Substratmaterialien lassen sich durch Wahl geeigneter Prozessparameter herstellen.

Der Gehalt an Verbindungen der Formel 1 kann durch mehrere Faktoren beeinflusst werden. Beispielsweise ist die Reinheit der Edukte und Hilfsstoffe von Bedeutung. Ferner können Prozessparameter wie das molare Verhältnis von eingesetztem Bisphenol und Phosgen, Temperaturen während der Reaktion, Reaktions- und Verweilzeiten maßgebend sein. Für den Fachmann besteht die Aufgabe darin, den Prozess derart zu steuern, dass die erfindungsgemäßen Grenzen des Carbamatgehalts im Substratmaterial nicht überschritten werden. Die beschriebene Messung des Carbamatgehaltes der Formel 1 ist für den Fachmann ein geeignetes Instrument den Prozess zu kontrollieren.

Eine geeignete Auswahl von Prozessparametem, um das gewünschte Substratmaterial zu erhalten kann wie folgt aussehen:

Die Herstellung des Substratmaterials kann in einem kontinuierlichen Phasengrenzflächenprozess erfolgen. Während der verwendete Überschuss an Phosgen, bezogen auf die Summe der eingesetzten Bisphenole, bei der üblichen kontinuierlichen Polycarbonatsynthese zwischen 3 und 100 mol-%, bevorzugt zwischen 5 und 50 mol% liegt, wird das erfindungsgemäße Substratmaterial bei Phosgenüberschüssen von 5 bis 20 mol-%, bevorzugt 8 bis 17 mol-% hergestellt. Dabei wird über einmalige oder mehrfache Nachdosierung von Natronlauge oder entsprechende Nachdosierung von Bisphenolatlösung der pH-Wert der wässrigen Phase während und nach der Phosgendosierung im alkalischen Bereich, bevorzugt zwischen 8,5 und 12 gehalten, währen er nach der Katalysatorzugabe auf 10 bis 14 eingestellt wird. Die Temperatur während der Phosgenierung beträgt 0°C bis 40°C, bevorzugt 5°C bis 36°C.

Die Herstellung der erfindungsgemäßen Polycarbonate erfolgt nach dem Phasengrenzflächenverfahren. Dieses Verfahren zur Polycarbonatsynthese ist mannigfaltig in der Literatur beschrieben; beispielhaft sei auf H. Schnell, Chemistry and Physics of Polycarbonates, Polymer Reviews, Vol. 9, Interscience Publishers, New York 1964 S. 33 ff., auf Polymer Reviews, Vol. 10, "Condensation Polymers by Interfacial and Solution Methods", Paul W. Morgan, Interscience Publishers, New York 1965, Kap. VIII, S. 325, auf Dres. U. Grigo, K. Kircher und P. R- Müller "Polycarbonate" in BeckerBraun, Kunststoff-Handbuch, Band 3/1, Polycarbonate, Polyacetale, Polyester, Celluloseester, Carl Hanser Verlag München, Wien 1992, S. 118-145 sowie auf EP-A 0 517 044 verwiesen.

Gemäß diesem Verfahren erfolgt die Phosgenierung eines in wässrig-alkalischer Lösung (oder Suspension) vorgelegten Dinatriumsalzes eines Bisphenols (oder eines Gemisches verschiedener Bisphenole) in Gegenwart eines inerten organischen Lösungsmittels oder Lösungsmittelgemisches, welches eine zweite Phase ausbildet. Die entstehenden, hauptsächlich in der organischen Phase vorliegenden, Oligocarbonate werden mit Hilfe geeigneter Katalysatoren zu hochmolekularen, in der organischen Phase gelösten, Polycarbonaten auflcondensiert. Die organische Phase wird schließlich abgetrennt und das Polycarbonat durch verschiedene Aufarbeitungsschritte daraus isoliert.

Für die Herstellung von Polycarbonaten sind geeignete Dihydroxyarylverbindungen solche der Formel (2)

HO-Z-OH (2)

in welcher
- Z: ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (2) für einen Rest der Formel (3) 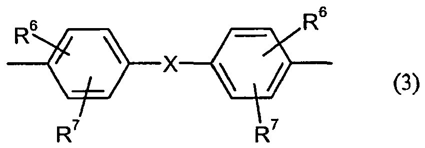 in der
- R⁶ und R⁷: unabhängig voneinander für H, C₁-C₁₈-Alkyl-, C₁-C₁₈-Alkoxy, Halogen wie Cl oder Br oder für jeweils gegebenenfalls substituiertes Aryl- oder Aralkyl, bevorzugt für H oder C₁-C₁₂-Alkyl, besonders bevorzugt für H oder C₁-C₈-Alkyl und ganz besonders bevorzugt für H oder Methyl stehen, und
- X: für eine Einfachbindung, -SO₂- -CO-, -O-, -S-, C₁- bis C₆-Alkylen, C₂- bis C₅-Alkyliden oder C₅- bis C₆- Cycloalkyliden, welches mit C₁- bis C₆-Alkyl, vorzugsweise Methyl oder Ethyl substituiert sein kann, ferner für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁ bis C₅-Alkylen, C₂ bis C₅-Alkyliden, C₅ bis C₆-Cycloalkyliden, -O-, -SO-, -CO-, -S-, -SO₂-,
oder ein für einen Rest der Formel (3a) oder (3b) 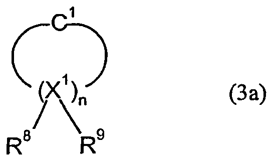 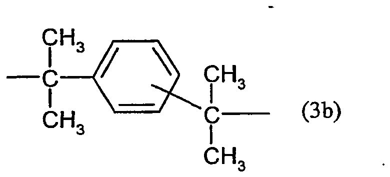 wobei
- R⁸ und R⁹: für jedes X¹ individuell wählbar, unabhängig voneinander Wasserstoff oder C₁ bis C₆-Alkyl, vorzugsweise Wasserstoff, Methyl oder Ethyl bedeuten und
- X¹: Kohlenstoff und
- n: eine ganze Zahl von 4 bis 7, bevorzugt 4 oder 5 bedeuten, mit der Maßgabe, dass an mindestens einem Atom X¹, R⁸ und R⁹ gleichzeitig Alkyl sind.

Beispiele für Dihydroxyarylverbindungen sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-düsopropylbenzole, sowie deren kernalkylierte und kernhalogenierte Verbindungen.

Für die Herstellung der erfindungsgemäß zu verwendenden Polycarbonate geeignete Diphenole sind beispielsweise Hydrochinon, Resorcin, Dihydroxydiphenyl, Bis-(hydroxyphenyl)-alkane, Bis(hydroxy-phenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC).

Besonders bevorzugte Diphenole sind 4,4'-Dihydroxydiphenyl, 1,1-Bis-(4-hydroxyphenyl)-phenylethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcycIohexan (Bisphenol TMC).

Diese und weitere geeignete Diphenole sind z.B. in den US-A 2 999 835, 3 148 172, 2 991 273, 3 271 367, 4 982 014 und 2 999 846, in den deutschen Offenlegungsschriften 1 570 703, 2 063 050, 2 036 052, 2 211 956 und 3 832 396, der französischen Patentschrift 1 561 518, in der Monographie "H. Schnell, Chemistry and Physics of Polycarbonates, Interscience Publishers, New York 1964, S. 28ff; S.102ff", und in "D.G. Legrand, J.T. Bendler, Handbook of Polycarbonate Science and Technology, Marcel Dekker New York 2000, S. 72ff." beschrieben

Im Falle der Homopolycarbonate wird nur ein Diphenol eingesetzt, im Falle von Copolycarbonaten werden zwei oder mehr Diphenole eingesetzt. Die verwendeten Diphenole, wie auch alle anderen der Synthese zugesetzten Chemikalien und Hilfsstoffe können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Die zur Regelung des Molekulargewichtes benötigten monofunktionellen Kettenabbrecher, wie Phenol oder Alkylphenole, insbesondere Phenol, p-tert. Butylphenol, iso-Octylphenol, Cumylphenol, deren Chlorkohlensäureester oder Säurechloride von Monocarbonsäuren bzw. Gemischen aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind bzw. im Falle der Säurechloride und Chlorkohlensäureester als Kettenabbrecher solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wenn kein Phosgen mehr vorliegt, aber der Katalysator noch nicht dosiert wurde, bzw. sie werden vor dem Katalysator, mit dem Katalysator zusammen oder parallel dazu dosiert.

In der gleichen Weise werden eventuell zu verwendende Verzweiger oder Verzweigermischungen der Synthese zugesetzt, üblicherweise jedoch vor den Kettenabbrechern. Üblicherweise werden Trisphenole, Quarterphenole oder Säurechloride von Tri- oder Tetracarbonsäuren verwendet, oder auch Gemische der Polyphenole oder der Säurechloride.

Einige der verwendbaren Verbindungen mit drei oder mehr als drei phenolischen Hydroxylgruppen sind beispielsweise
Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1 -Tri-(4-hydroxyphenyl)-ethan,
Tri-(4-hydroxyphenyl)-phenylmethan,
2,2-Bis-(4,4-bis-(4-hydroxyphenyl)-cyclohexyl]-propan,
2,4-Bis-(4-hydroxyphenyl-isopropyl)-phenol,
Tetra-(4-hydroxyphenyl)-methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und l,l,l-Tri-(4-hydroxyphenyl)-ethan.

Die in der Phasengrenzflächensynthese verwendeten Katalysatoren sind tert. Amine, insbesondere Triethylamin, Tributylamin, Trioctylamin, N-Ethylpiperidin, N-Methylpiperidin, N-i/n-Propylpiperidin; quartäre Ammoniumsalze wie Tetrabutylammonium- / Tributylbenzylammonium-/ Tetraethylammonium- hydroxid / -chlorid / -bromid / -hydrogen-sulfat / -tetrafluoroborat; sowie die den Ammoniumverbindungen entsprechenden Phosphoniumverbindungen. Diese Verbindungen sind als typische Phasengrenzflächen-Katalysatoren in der Literatur beschrieben, kommerziell erhältlich und dem Fachmann geläufig. Die Katalysatoren können einzeln, im Gemisch oder auch neben- und nacheinander der Synthese zugesetzt werden, gegebenenfalls auch vor der Phosgenierung, bevorzugt sind jedoch Dosierungen nach der Phosgeneintragung, es sei denn, es wird eine Oniumverbindung oder Gemische aus Oniumverbindungen als Katalysatoren verwendet, dann ist eine Zugabe vor der Phosgendosierung bevorzugt. Die Dosierung des Katalysators oder der Katalysatoren kann in Substanz, in einem inerten Lösungsmittel, vorzugsweise dem der Polycarbonatsynthese, oder auch als wässrige Lösung, im Falle der tert. Amine dann als deren Ammoniumsalze mit Säuren, bevorzugt Mineralsäuren, insbesondere Salzsäure, erfolgen. Bei Verwendung mehrerer Katalysatoren oder der Dosierung von Teilmengen der Katalysatorgesamtmenge können natürlich auch unterschiedliche Dosierungsweisen an verschiedenen Orten oder zu verschiedenen Zeiten vorgenommen werden. Die Gesamtmenge der verwendeten Katalysatoren liegt zwischen 0,001 bis 10 Mol % bezogen auf Mole eingesetzte Bisphenole, bevorzugt 0,01 bis 8 Mol %, besonders bevorzugt 0,05 bis 5 Mol %.

Den erfindungsgemäßen Polycarbonaten können noch die für Polycarbonate üblichen Additive in den üblichen Mengen zugesetzt werden. Der Zusatz von Additiven dient der Verlängerung der Nutzungsdauer oder der Farbe (Stabilisatoren), der Vereinfachung der Verarbeitung (z.B. Entformer, Fließhilfsmittel, Antistatika) oder der Anpassung der Polymereigenschaften an bestimmte Belastungen (Schlagzähmodifikatoren, wie Kautschuke; Flammschutzmittel, Farbmittel, Glasfasern).

Diese Additive können einzeln oder in beliebigen Mischungen oder mehreren verschiedenen Mischungen der Polymerschmelze zugesetzt werden und zwar direkt bei der Isolierung des Polymeren oder aber nach Aufschmelzung von Granulat in einem sogenannten Compoundierungsschritt. Dabei können die Additive beziehungsweise deren Mischungen als Feststoff, d.h. als Pulver oder als Schmelze der Polymerschmelze zugesetzt werden. Eine andere Art der Dosierung ist die Verwendung von Masterbatches oder Mischungen von Masterbatches der Additive oder Additivmischungen.

Geeignete Additive sind beispielsweise beschrieben in "Additives for Plastics Handbook, John Murphy, Elsevier, Oxford 1999", im "Plastics Additives Handbook, Hans Zweifel, Hanser, München 2001"

Bevorzugte Thermostabilisatoren sind beispielsweise organische Phosphite, Phosphonate und Phosphane, meist solche bei denen die organischen Reste völlig oder teilweise aus gegebenenfalls substituierten aromatischen Resten bestehen. Als UV-Strabilisatoren werden z.B. substituierte Benztriazole eingesetzt. Diese und andere Stabilisatoren können einzeln oder in Kombinationen verwendet werden und in den genannten Formen dem Polymer zugesetzt werden.

Außerdem können Verarbeitungshilfsmittel wie Entformungsmittel, meist Derivate langkettiger Fettsäuren, zugesetzt werden. Bevorzugt sind z.B. Pentaerythrittetrastearat und Glycerinmonostearat. Sie werden allein oder im Gemisch vorzugsweise in einer Menge von 0,02 bis 1 Gew.%, bezogen auf die Masse der Zusammensetzung eingesetzt.

Geeignete flammhemmende Additive sind Phosphatester, d.h. Triphenylphosphat, Resorcindiphosphorsäureester, bromhaltige Verbindungen, wie bromierte Phosphorsäureester, bromierte Oligocarbonate und Polycarbonate, sowie bevorzugt Salze fluorierter organischer Sulfonsäuren.

Geeignete Schlagzähmodifikatoren sind beispielsweise Pfropfpolymere enthaltend eine oder mehrere Pfropfgrundlagen ausgewählt aus mindestens einem Polybutadienkautschuk, Acrylatkautschuk (vorzugsweise Ethyl- oder Butylacrylatkautschuk), Ethylen-Propylen-Kautschuke und Pfropfinonomeren ausgewählt aus mindestens einem Monomer aus der Gruppe Styrol, Acrylnitril, Alkylmethacrylat (vorzugsweise Methylmethacrylat) oder interpenetrierende Siloxan- und Acrylat-Netzwerke mit aufgepfropftem Methylmethacrylat oder Styrol-Acrylnitril.

Des Weiteren können Farbmittel, wie organische Farbstoffe oder Pigmente oder anorganische Pigmente, IR-Absorber, einzeln, im Gemisch oder auch in Kombination mit Stabilisatoren, Glasfasern, Glas(hohl)kugeln, anorganischen Füllstoffen zugesetzt werden.

Gegenstand der vorliegenden Anmeldung sind weiterhin die aus den erfindungsgemäßen Polycarbonaten erhältlichen Extrudate und Formteile, insbesondere solchen zur Verwendung im transparenten Bereich, ganz besonders im Bereich optischer Anwendungen wie z.B. Platten, Stegplatten, Verglasungen, Streuscheiben, Lampenabdeckungen, oder optischer Datenspeicher, wie Audio-CD, CD-R(W), DVD, DVD-R(W), Minidisks in ihren verschiedenen nur lesbaren oder aber einmalbeschreibbaren gegebenenfalls auch wiederholt beschreibbaren Ausführungsformen.

Gegenstand der vorliegenden Erfindung ist weiterhin die Verwendung der erfindungsgemäßen Polycarbonate zur Herstellung von Extrudaten und Formteilen.

Weitere Anwendungen sind beispielsweise, ohne jedoch den Gegenstand der vorliegenden Erfindung einzuschränken:
1. Sicherheitsscheiben, die bekanntlich in vielen Bereichen von Gebäuden, Fahrzeugen und Flugzeugen erforderlich sind, sowie als Schilde von Helmen.
2. Folien
3. Blaskörper (s.a. US-A 2 964 794), beispielsweise 1 bis 5 Gallon Wasserflaschen.
4. Lichtdurchlässige Platten, wie Massivplatten oder insbesondere Hohlkammerplatten, beispielsweise zum Abdecken von Gebäuden wie Bahnhöfen, Gewächshäusern und Beleuchtungsanlagen.
5. Optische Datenspeicher, wie Audio CD's, CD-R(W)'s, DCD's, DVD-R(W)'s, Minidisks und den Folgeentwicklungen
6. Ampelgehäuse oder Verkehrsschilder
7. Schaumstoffe mit offener oder geschlossener gegebenenfalls bedruckbarer Oberfläche
8. Fäden und Drähte (s. a. DE-A 11 37 167)
9. Lichttechnische Anwendungen, gegebenenfalls unter Verwendung von Glasfasern für Anwendungen im transluzenten Bereich
10. Transluzente Einstellungen mit einem Gehalt an Bariumsulfat und oder Titandioxid und oder Zirkoniumoxid bzw. organischen polymeren Acrylatkautschuken (EP-A 0 634 445, EP-A 0 269 324) zur Herstellung von lichtdurchlässigen und lichtstreuenden Formteilen.
11. Präzisionsspritzgussteile, wie Halterungen, z.B. Linsenhalterungen; hier werden gegebenenfalls Polycarbonate mit Glasfasern und einem gegebenenfalls zusätzlichen Gehalt von 1-10 Gew. % Molybdändisulfid (bez. auf die gesamte Formmasse) verwendet.
12. optische Geräteteile, insbesondere Linsen für Foto- und Filmkameras (DE-A 27 01 173).
13. Lichtübertragungsträger, insbesondere Lichtleiterkabel (EP-A 0 089 801) und Beleuchtungsleisten
14. Elektroisolierstoffe für elektrische Leiter und für Steckergehäuse und Steckverbinder sowie Kondensatoren.
15. Mobiltelefongehäuse.
16. Network interface devices
17. Trägermaterialien für organische Fotoleiter
18. Leuchten, Scheinwerferlampen, Streulichtscheiben oder innere Linsen.
19. Medizinische Anwendungen wie Oxygenatoren, Dialysatoren.
20. Lebensmittelanwendungen, wie Flaschen, Geschirr und Schokoladenformen.
21. Anwendungen im Automobilbereich, wie Verglasungen oder in Form von Blends mit ABS als Stoßfänger.
22. Sportartikel wie Slalomstangen, Skischuhschnallen.
23. Haushaltsartikel, wie Küchenspülen, Waschbecken, Briefkästen
24. Gehäuse, wie Elektroverteilerkästen
25. Gehäuse für elektrische Geräte wie Zahnbürsten, Föne, Kaffeemaschinen, Werkzeugmaschinen, wie Bohr-, Fräs-, Hobelmaschinen und Sägen
26. Waschmaschinen-Bullaugen
27. Schutzbrillen, Sonnenbrillen, Korrekturbrillen bzw. deren Linsen.
28. Lampenabdeckungen
29. Verpackungsfolien
30. Chip-Boxen, Chipträger, Boxen für Si-Wafer
31. Sonstige Anwendungen wie Stallmasttüren oder Tierkäfige.

### Beispiele

Das Verfahren zur Messung des Gehalts der Verbindungen der Formel (1) im Polycarbonat ist nachfolgend beschrieben:

500 mg Polycarbonat werden in 20 g Tetrahydrofuran (THF) gelöst, mit 1,91 g 32 %iger Natronlauge und 5 g Wasser versetzt und über Nacht (mindestens 15 h) bei Raumtemperatur unter Schütteln verseift. Nach Verseifen wird die Lösung mit Salzsäure angesäuert und mit THF auf 50 ml aufgefüllt. In die HPLC werden 15 µl injiziert. Die Detektion erfolgt wahlweise mit Dioden-Array-Detektor (DAD), Fluoreszenzdetektor (FLD) oder Massenspektrometrie (MS).

Die Kalibrierung erfolgt nach externer Standard-Methode (Mehrpunktkalibrierung).

Das Verfahren zur Messung des elektrostatischen Feldes am entsprechenden Spritzgusskörper, wobei es sich im vorliegenden Fall um eine optische Disk handelt, ist wie folgt:

Zur Messung der elektrischen Feldstärke wird ein Feldmeter (EMF 581230) der Firma Eltec verwendet. Unmittelbar nach Ende des Spritzgussprozesses wird das Formteil (Disk) über einen Roboterarm entnommen und abgelegt. Dabei darf die Disk nicht mit Metall in Berührung kommen, da sonst die Messung beeinträchtigt wird. Ferner müssen evtl. vorhandene Ionisatoren abgeschaltet sein.

Das Feldmeter wird oberhalb der Disk in einem Abstand von 100 mm zur horizontalen Diskoberfläche positioniert. Der Abstand des Feldmeters zum Innenrand der Disk beträgt dabei 29 mm und ist damit mittig über der beschreibbaren Fläche ausgerichtet. Die Disk wird dabei nicht bewegt. Die Messung des Feldes erfolgt somit in einem Zeitraum von 3 bis 10 Sekunden nach Abschluss des Spritzgussprozesses.

Das Messgerät ist an einen x/y-Schreiber angeschlossen, auf dem die jeweiligen Werte ausgedruckt werden. Jeder gemessenen Disk wird somit ein bestimmter integraler Wert des elektrischen Feldes zugeordnet. Zur Begrenzung der Datenmenge werden nach Start des Prozesses 100 Messungen durchgeführt, d.h. von den 100 ersten Disks wird das entsprechende elektrische Feld aufgenommen. Nach jeweils 60 Minuten werden weitere 100 Messungen durchgeführt. Nach der 4. Messserie, d.h. nach ca. 3 Stunden wird die Messung eingestellt.

Bei der Durchführung der Messung ist darauf zu achten, dass die Luftfeuchtigkeit während der Messung 30 bis 60 %, vorzugsweise 35 bis 50 % und die Raumtemperatur 25 bis 28°C beträgt. Bei diesem Verfahren wird das elektrische Feld an der Oberfläche der optischen Disk direkt nach dem Spritzgussprozess mittels einer Sonde gemessen. Eine Disk gilt dann als schwer beschichtbar, wenn das elektrische Feld einen Wert von 18 kV/m übersteigt.

### Beispiel 1

### Herstellung von 1-(4-tert.-Butylphenyloxycarbonyloxy)-1'-(piperidincarbonsäure)-4,4'-isopropylidendiphenylester

9.30 g (0.025 mol) Isopropylidendiphenylbischlorkohlensäureester werden unter Argon in 150 ml Dichlormethan vorgelegt und auf 0°C abkühlt. 48.49 g (0.428 mol) N-Ethylpiperidin werden in 20 ml Dichlormethan gelöst und bei 0°C zur Bischlorkohlensäureester-Lösung bei 0°C hinzugetropft. Zu dieser Lösung werden dann 3.76 g (0.025 mol) tert. Butylphenol gelöst in 10 ml Dichlormethan bei 0°C getropft. Man lässt auf Raumtemperatur erwärmen und rührt für 3 Stunden. Danach wird das Lösungsmittel im Vakuum entfernt. Der Rückstand wird in 500 ml Toluol aufgekocht und heiß abfiltriert. Beim Abkühlen fallen in der Mutterlauge Kristalle aus. Die Mutterlauge wird filtriert und eingeengt (95°C, 25mbar). Man erhält 13,2 g eines hochviskosen roten Öls. Dies wird in 100 ml Ethylacetat gelöst und nach Zugabe von 10 g Kieselgel (Kieselgel 60; 0,04-0,063 µm; Merck 109385/Lt.: 948 785 203) eingeengt und auf eine Kieselgelsäule (Säule 0̸ 5 cm, Füllhöhe ca. 25 cm) gegeben. Nach Chromatographie mit einem Lösungsmittelgemisch aus n-Hexan/Ethylacetat: (9:1) erhält man 2.3 g eines glasartigen Feststoffs.
¹H-NMR (400 MHz, CDCl₃) δ = 7.4-7.38 (m, 2 H), 7.28-7.23 (m, 2 H), 7.22-7.13 (m, 6 H), 7.03-6.98 (m, 2 H), 3.65-3.45 (m, 4 H), 1.70-1.55 (m, 6 H), 1.66 (s, 6 H), 1.32 (s, 9 H).

### Beispiel 2

### Herstellung von 1-(4-tert.-butylphenyloxycarbonyloxy)-1'-(4,4'-Isopropylidendiphenyl)-N,N-diethylcarbamat

5.0 g (0.013 mol) Isopropylidendiphenylbischlorkohlensäureester werden in 100 ml Dichlormethan bei 0°C unter Argon vorgelegt. Zu dieser Lösung werden 4.29 g (0.042 mol) Triethylamin gelöst in 30 ml Dichlormethan bei 0°C hinzugetropft. Anschließend werden 2.02 g (0.013 mol) tert. Butylphenol gelöst in 30 ml Dichlormethan hinzugetropft. Man lässt auf Raumtemperatur erwärmen und rührt für 3 Stunden. Danach wird das Lösungsmittel im Vakuum entfernt. Der Rückstand wird in 500 ml Toluol aufgekocht und heiß abfiltriert

Das Lösungsmittel wird im Vakuum entfernt. Das Rohprodukt wird an Kieselgel chromatographiert (h: 16 cm, 0̸ 5cm, Laufmittel n-Hexan/ EE 9:1)

Man erhält 2,1 g eines gelben hochviskosen Harzes.
¹H-NMR (400 MHz, CDCl₃) δ = 7.45-7.38 (m, 2 H), 7.28-7.15 (m, 8 H), 7.05-6.98 (m, 2 H), 3.50-3.30 (m, 4 H), 1.67 (s, 6 H), 1.32 (s, 9 H), 1.28-1.15 (m, 6 H).

### Beispiel 3

### Herstellung von Piperidincarbonsäure-4-[1-(4-hydroxyphenyl)-1-methylethyl]-phenylester

0,5 g 1-(4-tert. Butylphenyloxycarbonyloxy)-1'-(piperidincarbonsäure)-4,4'-isopropylidendiphenylester werden in 20 g THF gelöst, mit 0,5 g 32 %iger Natronlauge und 5 g Wasser versetzt und über Nacht (mind. 15 Stunden) unter Schütteln verseift.

### Aufarbeitung:

Die wässrige Phase der THF-Lösung wird abgetrennt, die org. Phase eingeengt. Der Rückstand wird in Diethylether aufgenommen und mehrmals mit Wasser gewaschen. Man trocknet die organische Phase über Magnesiumsulfat, filtriert vom Trocknungsmittel ab und entfernt das Lösungsmittel im Vakuum. Man erhält 1,46 g Rohprodukt, welches an Kieselgel (Kieselgel 60; 0,04-0,063 µm; Merck 109385/Lt.: 948 785 203) mit einem Lösungsmittelgemisch aus Hexan/Ethylacetat (9:1) chromatographiert wird (Säule 0 5 cm, Füllhöhe ca. 25 cm). Im weiteren Verlauf wird als Lösungsmittelgemisch Hexan/Ethylacetat (5:1) verwendet. Man erhält 1.0 g eines weißen Feststoffs.
¹H-NMR (400 MHz, CDCl₃) δ = 7.20-7.15 (m, 2 H), 7.10-7.05 (m, 2 H), 7.02-6.95 (m, 2 H), 6.75-6.68 (m, 2 H), 3.65-3.45 (m, 4 H), 1.63 (s, 6 H).

### Beispiel 4

### Herstellung von Diethylcarbaminsäure-4-[1-(4-hydroxyphenyl)-1-methylethyl]-phenylester

0,5 g 1-(4-tert. Butylphenyloxycarbonyloxy)-1'-(4,4'-Isopropylidendiphenyl)-N,N-diethylcarbamat werden in 20 g THF gelöst, mit 0,5 g 32 %iger Natronlauge und 5 g Wasser versetzt und über Nacht (mind. 15 Stunden) unter Schütteln verseift.

### Aufreinigung:

Die wässrige Phase der THF-Lösung wird abgetrennt, die org. Phase eingeengt. Der Rückstand wird in Diethylether aufgenommen und mehrmals mit Wasser gewaschen. Man trocknet die organische Phase über Magnesiumsulfat, filtriert vom Trocknungsmittel ab und entfernt das Lösungsmittel im Vakuum. Das Rohprodukt wird an Kieselgel (Kieselgel 60; 0,04-0,063 µm; Merck 109385/Lt.: 948 785 203) mit einem Lösungsmittelgemisch aus Hexan/Ethylacetat (9:1) chromatographiert (Säule 0̸ 3 cm, Füllhöhe ca. 25 cm). Im weiteren Verlauf wird als Lösungsmittelgemisch Hexan/Ethylacetat (1:1) verwendet. Man erhält 0.29 g eines weißen Feststoffs.
¹H-NMR (400 MHz, CDCl₃) δ = 7.26-7.22 (m, 2 H), 7.12-7.08 (m, 2 H), 7.04-6.98 (m, 2 H), 6.72-6.68 (m, 2 H), 3.55-3.35 (m, 4 H), 1.67 (s, 6 H), 1.35-1.15 (m, 6 H).

### Beispiel 5

Die Herstellung des Polycarbonats erfolgt nach dem bekannten Phasengrenzflächenverfahren. Es wird nach einem Konti-Verfahren gearbeitet.

Es werden die Bisphenolatlösung (Bisphenol A; Alkaligehalt 2,12 mol NaOH/mol BPA) mit 750 kg/h (14,93 Gew.-%), das Lösungsmittel (Dichlormethan/Chlorbenzol 1:1) mit 646 kg/h und das Phosgen mit 56,4 kg/h eingespeist und zur Reaktion gebracht. Die Temperatur im Reaktor beträgt 35°C. Ferner wird Natronlauge (32 Gew.-%) mit 9,97 kg/h ebenfalls zudosiert. Im Verlauf der Aufkondensation wird eine zweite Menge Natronlauge (32 Gew.-%) mit 29,27 kg/h sowie einer Lösung von Kettenabbrechern (11,7 Gew.-% tert. Butylphenol in Methylenchlorid/Chlorbenzol 1:1) und 34,18 kg/h dosiert. Danach wird N-Ethylpiperidin gelöst in Methylenchlorid/Chlorbenzol (1:1; 2,95 Gew.-% N-Ethylpiperidin) mit 33,0 kg/h als Katalysator eingespeist. Die Phasen werden getrennt, die organische Phase wird einmal mit verdünnter Salzsäure und fünfmal mit Wasser gewaschen. Anschließend wird die Polycarbonatlösung eingeengt, in einem Eindampfkessel aufkonzentriert und die Polymerschmelze über einen Ausdampfextruder abgesponnen und granuliert.

0,5 g des so hergestellten Polycarbonat (s. Tabelle 1) werden in 20 g THF gelöst, mit 1,9 g 32 %i-ger Natronlauge und 5 g Wasser versetzt und über Nacht (mindestens 15 h) unter Schütteln verseift. Nach Verseifen wird die Lösung mit Salzsäure angesäuert und mit THF auf 50 ml aufgefüllt. In die HPLC werden 15 5 µl der Lösung injiziert. Die Detektion erfolgt mit FLD.

Die Kalibrierung erfolgt nach externer Standard-Methode (Mehrpunktkalibrierung) mit der Referenzsubstanz aus Beispiel 3.

Der Gehalt an Carbamatverbindungen des Beispiels 2 im Polycarbonat gemäß Beispiel 5 beträgt 37 mg/kg (37 ppm).

### Beispiel 6

### Versleichsbeispiel

Die Herstellung des Polycarbonats erfolgt wie in Beispiel 5 beschrieben. Allerdings werden in den Reaktor die Bisphenolatlös-ung (Bisphenol A) mit 750 kg/h (14,93 Gew.-%), das Lösungsmittel (Dichlormethan/Chlorbenzol 1:1) mit 646 kg/h und das Phosgen mit 58,25 kg/h eingespeist. Ferner wird Natronlauge (32 Gew.-%) mit 12,34 kg/h ebenfalls zudosiert. Die zweite Menge Natronlauge beträgt 36,20 kg/h; die Menge an Kettenabbrecher 34,18 kg/h bei den in Beispiel 5 angegebenen Konzentrationen. Die Menge an Katalysator beträgt 33 kg/h. Die Aufarbeitung erfolgt wie in Beispiel 5 angegeben.

0,5 g des so hergestellten Polycarbonats (s. Tabelle 1) werden in 20 g THF gelöst, mit 1,9 g 32 %iger Natronlauge und 5,0 g Wasser versetzt und über Nacht (mindestens 15 h) unter Schütteln verseift. Nach Verseifen wird die Lösung mit Salzsäure angesäuert und mit THF auf 5 ml aufgefüllt. In die HPLC werden 15 µl der Lösung injiziert. Die Detektion erfolgt mit FLD.

Die Kalibrierung erfolgt nach externer Standard-Methode (Mehrpunktkalibrierung) mit der Referenzsubstanz aus Beispiel 3.

Der Gehalt an Carbamatverbindungen des Beispiels 2 beträgt in dieser Polycarbonatprobe 285 mg/kg (285 ppm)

**Tabelle 1**

| Bsp-Nr | Molekular-gewicht M_{w} [g/mol] | Tg [°C] | Carbamatderivat des Beispiels 2 nach Hydrolyse [mg/kg] | E-Feld auf Disks nach 3 h [KV/m] |
|---|---|---|---|---|
| 5 | 17.500 | 145 | 37 | < 18 |
| 6 | 17.700 | 145 | 285 | > 18 |

Wie aus der Tabelle ersichtlich zeigt das erfindungsgemäße Polycarbonat Carbamatkonzentrationen im gewünschten Bereich und das damit verbundene gute elektrostatische Verhalten.

## Patentansprüche

1. Polycarbonat erhältlich nach dem kontinuierliehen Phasensrenzflächenverflahren mit einem Überschuss von 8 bis 17 Mol-% Phosgen bezogen auf die Summe der eincresetzten Bisphenole, **dadurch gekennzeichnet, dass** der Anteil von Carbamatderivaten der Formel (1) dieser Polycarbonatharze, gemessen nach alkalischer Hydrolyse mit Natronlauge, 0,01 bis 150 ppm beträgt 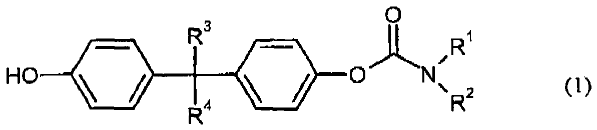 worin
R¹ und R² unabhängig voneinander Wasserstoff oder C₁-C₁₂-Alkyl oder R¹ und R² gemeinsam C₄- bis C₁₂-Alkyliden bedeuten
R³ und R⁴ unabhängig voneinander für Wetsserstoff, C₁-C₁₂-Alkyl oder Phenyl, oder R³ und R⁴ mit dem Kohlenstoffatom, an das sie gebunden sind, Cyclohexyl oder Trimethylcyctohexy) bilden.

2. Polycarbonat nach Anspruch 1, enthaltend Verbindungen der Formel (1) in einer Menge von 0,01 bis 100 ppm.

3. Polycarbonat nach Anspruch 1, wobei der Anteil von Verbindungen der Formel (1) 0,01bis 50 ppm beträgt.

4. Polycarbonat nach Anspruch 1, wobei in der Formel (1)
R¹ und R² unabhängig voneinander für Wasserstoff, Methyl, Ethyl, Propyl oder Butyl oder R' und R² gemeinsam für C₅-C₆-Alkyliden stehen,
R³ und R⁴ unabhängig voneinander für Wasserstoff, C₁-C₈-Alkyl oder Phenyl stehen oder R³ und R⁴ mit dem Kohlenstoffatom, an das sie gebunden sind, Cyclohexyl oder Trimethylcyclohexyl bilden.

5. Polycarbonat gemäß Anspruch 1 als substratmaterial.

6. Polycarbonat nach Anspruch 1, wobei das elektrostatische Feld gemessen an daraus hergestellten Spritzgussteilen im Abstand von 100 mm nicht mehr als 18 kV/m beträgt.

7. verwendung von Polycarbonat gemäß Anspruch 1 zur Herstellung von Spritzgussteilen.

8. Spritzgussteile, erhältlich aus Polycarbonat gemäß Anspruch 1, wobei das elektrostatische Feld gemessen im Abstand von 100 mm nicht mehr als 18 kV/m beträgt.

9. Träger gemäß Anspruch 8 für eine optische Scheibe.

10. Optisches Datenspeichermedium enthaltend einen Träger erhältlich aus Polycarbonat gemäß Anspruch 1.

## Claims

1. Polycarbonate obtainable by the continuous phase interface process with an excess of 8 to 17 mol% of phosgene, relative to the sum of the bisphenols used, **characterized in that** the fraction of carbamate derivatives of the formula (1) in these polycarbonate resins, measured by alkaline hydrolysis with aqueous sodium hydroxide solution, is 0.01 to 150 ppm 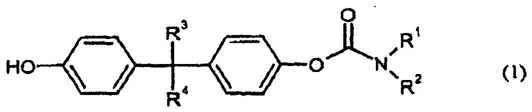 wherein
R¹ and R² independently of one another denote hydrogen or C₁-C₁₂-alkyl, or R¹ and R² together denote C₄- to C₁₂-alkylidene, and
R³ and R⁴ independently of one another denote hydrogen, C₁-C₁₂-alkyl or phenyl, or R³ and R⁴ with the carbon atom to which they are bonded form cyclohexyl or trimethylcyclohexyl.

2. Polycarbonate according to Claim 1, comprising compounds of the formula (1) in an amount of 0.01 to 100 ppm.

3. Polycarbonate according to Claim 1, where the fraction of compounds of the formula (1) is 0.01 to 50 ppm.

4. Polycarbonate according to Claim 1, where in the formula (1)
R¹ and R² independently of one another stand for hydrogen, methyl, ethyl, propyl or butyl, or R¹ and R² together stand for C₅-C₆-alkylidene, and
R³ and R⁴ independently of one another stand for hydrogen, C₁-C₈-alkyl or phenyl, or R³ and R⁴ with the carbon atom to which they are bonded form cyclohexyl or trimethylcyclohexyl.

5. Polycarbonate according to Claim 1 as substrate material.

6. Polycarbonate according to Claim 1, where the electrostatic field, measured on injection-moulded articles produced from said polycarbonate, at a distance of 100 mm is not more than 18 kV/m.

7. Use of polycarbonate according to Claim 1 for producing injection-moulded articles.

8. Injection-moulded articles obtainable from polycarbonate according to Claim 1, where the electrostatic field, measured at a distance of 100 mm, is not more than 18 kV/m.

9. Carrier according to Claim 8 for an optical disc.

10. Optical data storage medium comprising a carrier obtainable from polycarbonate according to Claim 1.

## Revendications

1. Polycarbonate pouvant être obtenu par le procédé à l'interface de phases continu avec un excès de 8 à 17 % en moles de phosgène par rapport à la somme des bisphénols utilisés, **caractérisé en ce que** la proportion de dérivés carbamate de formule (1) de ces résines de polycarbonate, mesurée après hydrolyse alcaline avec de l'hydroxyde de sodium, est de 0,01 à 150 ppm 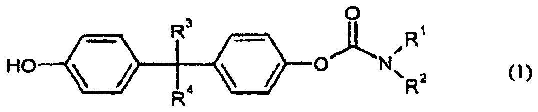 dans laquelle
R¹ et R² signifient indépendamment l'un de l'autre l'hydrogène ou un alkyle en C₁-C₁₂ ou R¹ et R² signifient ensemble un alkylidène en C₄ à C₁₂,
R³ et R⁴ signifient indépendamment l'un de l'autre l'hydrogène, un alkyle en C₁-C₁₂ ou un phényle, ou R³ et R⁴ forment un cyclohexyle ou triméthylcyclohexyle avec l'atome de carbone auquel ils sont reliés.

2. Polycarbonate selon la revendication 1, contenant des composés de formule (1) en une quantité de 0,01 à 100 ppm.

3. Polycarbonate selon la revendication 1, dans lequel la proportion de composés de formule (1) est de 0,01 à 50 ppm.

4. Polycarbonate selon la revendication 1, dans lequel dans la formule (1)
R¹ et R² représentent indépendamment l'un de l'autre l'hydrogène, méthyle, éthyle, propyle ou butyle, ou R¹ et R² représentent ensemble un alkylidène en C₅-C₆,
R³ et R⁴ représentent indépendamment l'un de l'autre l'hydrogène, un alkyle en C₁-C₈ ou un phényle, ou R³ et R⁴ forment un cyclohexyle ou triméthylcyclohexyle avec l'atome de carbone auquel ils sont reliés.

5. Polycarbonate selon la revendication 1, en tant que matériau substrat.

6. Polycarbonate selon la revendication 1, dans lequel le champ électrostatique mesuré sur des pièces moulées par injection fabriquées à partir de celui-ci à une distance de 100 mm n'est pas supérieur à 18 kV/m.

7. Utilisation du polycarbonate selon la revendication 1 pour la fabrication de pièces moulées par injection.

8. Pièces moulées par injection, pouvant être obtenues à partir du polycarbonate selon la revendication 1, dans lesquelles le champ électrostatique mesuré à une distance de 100 mm n'est pas supérieur à 18 kV/m.

9. Support selon la revendication 8 pour un disque optique.

10. Support optique de stockage de données contenant un support pouvant être obtenu à partir du polycarbonate selon la revendication 1.
